# EUROPÄISCHE PATENTANMELDUNG

(11) **EP 4 350 474 A1**
(43) Veröffentlichungstag der Anmeldung: **10.04.2024**
(21) Anmeldenummer: 23200951.4
(22) Anmeldetag: 29.09.2023
(51) Int. Cl.: G06F 1/16, G06F 3/039

(54) **BEDIENADAPTER FÜR EIN MOBILES ENDGERÄT ZUR FERNBEDIENUNG VON BAUMASCHINEN UND VERFAHREN ZUR FERNBEDIENUNG**

(30) Priorität: 07.10.2022 DE 102022126004
(71) Anmelder: Wacker Neuson Produktion GmbH & Co. KG, 85084 Reichertshofen (DE)
(72) Erfinder: EIB, Dominic, 85283 Wolnzach (DE); LANGE, Christian, 85051 Ingolstadt (DE); STEGMEIR, Stephan, 86529 Schrobenhausen (DE); PFETSCH, Stefan, 81371 München (DE)
(74) Vertreter: Müller Hoffmann & Partner

(57) **Zusammenfassung**

Beschrieben wird ein Bedienadapter (10) für ein mobiles Endgerät (20) mit einem berührungsempfindlichen Bildschirm (22), insbesondere Smartphone oder Tabletcomputer, zur Fernsteuerung von Baumaschinen (202), insbesondere Bodenverdichtungsgeräten wie Grabenwalzen (202g) oder Rüttelplatten (202r), mit
- einem ersten Abschnitt (12), der an dem Bildschirm (22) des Endgeräts (20) anordenbar oder angeordnet ist, so dass der erste Abschnitt (12) zumindest einen Teil des Bildschirms (22) überlappt;
- einem zweiten Abschnitt (14), der an einer Rückseite (24) des Endgeräts (20) anordenbar oder angeordnet ist, so dass der zweite Abschnitt (14) zumindest einen Teil der Rückseite (24) überlappt;
- wobei der erste Abschnitt (12) und der zweite Abschnitt (14) zumindest einseitig mittels eines Verbindungsabschnitts (16) miteinander verbunden sind, so dass der Bedienadapter (10) an dem Endgerät (20) klemmend befestig-bar oder befestigt ist,
- wobei der erste Abschnitt (12) wenigstens ein von einer Bedienperson haptisch wahrnehmbares Führungselement (30a-d) aufweist, das dazu eingerichtet ist, innerhalb des Überlappungsbereichs von dem ersten Abschnitt (12) und dem Bildschirm (22) eine von der Bedienperson durchgeführte Bewegung, die von dem Bildschirm (22) erfassbar ist, haptisch zu begrenzen oder/und haptisch relativ zu dem Bildschirm (22) zu orientieren.

## Beschreibung

Die Erfindung betrifft einen Bedienadapter für ein mobiles Endgerät mit einem berührungsempfindlichen Bildschirm, insbesondere Smartphone oder Tabletcomputer, zur Fernsteuerung von Baumaschinen, insbesondere Bodenverdichtungsgeräten wie Grabenwalzen oder Rüttelplatten. Ferner betrifft die Erfindung ein Fernbedienungssystem mit einem solchen Bedienadapter und ein Verfahren zum Bedienen einer Baumaschine.

Derzeit ist es bekannt, Baumaschinen mittels eines mobilen Endgeräts, wie einem Smartphone oder Tabletcomputers, zu steuern. Ein Beispiel einer derartigen Baumaschine zeigt die Firma Bobcat in ihrem Internetauftritt unter https://www.bobcat.com/eu/de/parts-and-service/tools-services/max-control.

Bei Fernsteuerungen von Baumaschinen mittels mobiler Endgeräte, wie Smartphones oder Tabletcomputer, steht einer Bedienperson ausschließlich der berührungsempfindliche Bildschirm (Touchscreen) als Bedienfläche zur Verfügung. Entsprechend ist es erforderlich, dass die Bedienperson beim Bedienen der Baumaschine regelmäßig ihren Blick von der Baumaschine abwendet und auf den Bildschirm schaut, um sicherstellen zu können, dass die Finger der Bedienperson korrekt positioniert sind und somit die gewünschten grafisch dargestellten Bedienelemente betätigt werden.

Bei der Fernsteuerung von Baumaschinen ist es allerdings wünschenswert, dass während des ferngesteuerten Betriebs der Baumaschine die Bedienperson ihre volle Konzentration auf die Baumaschine richten kann, ohne dass sie dazwischen auf die Fernsteuerung blicken muss.

Die der Erfindung zu Grunde liegende Aufgabe wird darin gesehen, eine mittels eines mobilen Endgeräts durchführbare Fernbedienung einer Baumaschine zu ermöglichen, wobei die obigen Nachteile vermieden werden sollen.

Diese Aufgabe wird gelöst durch einen Bedienadapter für ein mobiles Endgerät, ein Fernbedienungssystem und ein Verfahren zur Fernbedienung einer Baumaschine mit den Merkmalen des jeweiligen unabhängigen Patentanspruchs. Vorteilhafte Ausgestaltungen mit zweckmäßigen Weiterbildungen sind in den abhängigen Patentansprüchen angegeben.

Vorgeschlagen wird ein Bedienadapter für ein mobiles Endgerät mit einem berührungsempfindlichen Bildschirm, insbesondere Smartphone oder Tabletcomputer, zur Fernsteuerung von Baumaschinen, insbesondere Bodenverdichtungsgeräte wie Grabenwalzen oder Rüttelplatten, mit einem ersten Abschnitt, der an dem Bildschirm des Endgeräts anordenbar oder angeordnet ist, so dass der erste Abschnitt zumindest einen Teil des Bildschirms überlappt und mit einem zweiten Abschnitt, der an einer Rückseite des Endgeräts anordenbar oder angeordnet ist, so dass der zweite Abschnitt zumindest einen Teil der Rückseite überlappt, wobei der erste Abschnitt und der zweite Abschnitt zumindest einseitig mittels eines Verbindungsabschnitts miteinander verbunden sind, so dass der Bedienadapter an dem Endgerät klemmend befestigbar oder befestigt ist, und wobei der erste Abschnitt wenigstens ein von einer Bedienperson haptisch wahrnehmbares Führungselement aufweist, das dazu eingerichtet ist, innerhalb des Überlappungsbereichs von dem erstem Abschnitt und dem Bildschirm eine von der Bedienperson durchgeführte Bewegung, die von dem Bildschirm erfassbar ist, haptisch zu begrenzen oder/und haptisch relativ zu dem Bildschirm zu orientieren.

Ein solcher Bedienadapter bietet der Bedienperson somit einen haptisch abgegrenzten oder/und haptisch Orientierung vermittelnden Wirkbereich für eine Fernbedienung, die mittels des Touchscreens des mobilen Endgeräts durchgeführt werden soll. Aufgrund der Ausgestaltung des Bedienadapters mit wenigstens einem Führungselement kann eine Bedienperson die Lage ihres Bedienfingers bzw. ihrer Bedienfinger relativ zu dem mobilen Endgerät bzw. relativ zu dem Touchscreen feststellen bzw. haptisch wahrnehmen, ohne dass sie hierzu auf den Bildschirm des mobilen Endgeräts blicken muss. Somit ist eine intuitive Fernbedienung der Baumaschine möglich, wobei eine verbesserte Betriebssicherheit gegeben ist, weil die Bedienperson sich vollständig auf die ferngesteuerte Bewegung der Baumaschine konzentrieren kann.

Bei dem Bedienadapter kann an dem zweiten Abschnitt wenigstens ein von der Bedienperson zu ergreifendes Halteelement angeordnet sein. Ein solches Halteelement kann insbesondere eine ergonomische Formgebung aufweisen, so dass das mobile Endgerät beispielsweise sicher mit einer Hand gehalten und bedient werden kann während der Fernbedienung der Baumaschine. Ein solches Halteelement kann beispielsweise kegelförmig oder zylinderförmig oder knaufartig ausgebildet sein.

Bei dem Bedienadapter kann der erste Abschnitt als erstes Führungselement einen von dem Bildschirm vorstehenden Begrenzungsrand aufweisen, der einen im Überlappungsbereich befindlichen Bedienbereich festlegt. Mit anderen Worten kann der erste Abschnitt eine Art Öffnung aufweisen, die von dem Begrenzungsrand gebildet bzw. eingefasst ist. Hierdurch kann die Bedienperson bei an dem Endgerät angebrachtem Bedienadapter durch die Öffnung hindurch den Touchscreen erreichen und bedienen. Die Öffnung gibt somit den Bedienbereich des Touchscreens frei. Dabei ist die Bedienung haptisch wahrnehmbar begrenzt durch den Begrenzungsrand, so dass die Bedienperson merkt, wenn sie mit einem Bedienfinger an den Rand des Bedienbereichs kommt.

Der Begrenzungsrand kann beispielsweise kreisförmig oder ellipsenförmig ausgebildet sein. Denkbar ist auch eine Ausgestaltung als Vieleck, insbesondere als Viereck oder Achteck, insbesondere mit abgerundeten Ecken.

Bei dem Bedienadapter kann innerhalb des Bedienbereichs an dem ersten Abschnitt eine Folie anbringbar oder angebracht sein, wobei an der Folie weitere Führungselemente angeordnet sind, die eine Orientierung innerhalb des Bedienbereichs ermöglichen. Hierbei können die Führungselemente als erhabene Linien oder Punkte oder als Durchbrüche in der Folie ausgeführt sein. Beispielsweise kann eine solche Folie einen zentral angeordneten erhabenen Punkt aufweisen, der haptisch wahrnehmbar das Zentrum des Bedienbereichs markiert. Alternativ oder ergänzend können an der Folie zueinander orthogonal ausgerichtete, erhabene Linienabschnitte ausgebildet sein, die beispielweise eine Art zweidimensionales Koordinatenkreuz bilden. Ferner ist es auch denkbar, weitere haptisch wahrnehmbare Orientierungshilfen an der Folie vorzusehen, etwa durch die Anordnung einer Abfolge von erhabenen Punkten, die eine Linie oder Gerade bilden.

Alternativ kann bei dem Bedienadapter der erste Abschnitt als Führungselement einen Joystick aufweisen, der relativ zu dem ersten Abschnitt beweglich gelagert ist und der dazu eingerichtet ist, Bewegungen des Joysticks auf den Bildschirm zu übertragen. Eine derartige Ausgestaltung des Bedienadapters mit einem Joystick ermöglicht beispielsweise auch ein Fernbedienung mit Handschuhen.

In diesem Zusammenhang kann bei dem Bedienadapter der Joystick relativ zu dem ersten Abschnitt federnd gelagert sein, derart, dass er aufgrund der wirkenden Federkräfte in einem unbetätigten Zustand in einer zentralen Ruhestellung angeordnet ist. Mittels des Joysticks ist somit eine Orientierung und Bewegungsführung für die Bedienperson haptisch wahrnehmbar. Hierdurch wird auch erreicht, dass die Bedienperson den Joystick entgegen der wirkenden Federkräfte auslenken muss, um die Fernbedienung der Baumaschine durchführen zu können. Ein derartiger Widerstand bei der Auslenkung des Joysticks ist insbesondere auch bei der Bedienung mit Handschuhen besser wahrnehmbar für die Bedienperson.

Der Bedienadapter bzw. der erste Abschnitt oder/und der zweite Abschnitt können an ihren jeweiligen dem mobilen Endgerät zugwandten Seiten rutschhemmende Elemente aufweisen, um einen sicheren Sitz des Bedienadapters an dem Endgerät zu ermöglichen. Optional kann der Bedienadapter zumindest teilweise auch mit einem rutschhemmenden Material beschichtet sein.

Der erste Abschnitt und der zweite Abschnitt können mittels des Verbindungsabschnitts auch relativ zueinander beweglich ausgeführt sein. Hierdurch kann ein zwischen dem ersten Abschnitt und dem zweiten Abschnitt vorhandener Abstand eingestellt werden, so dass der Bedienadapter an die Gerätedimension von unterschiedlichen Endgeräten anpassbar ist. In diesem Zusammenhang ist es auch denkbar, dass der erste Abschnitt und der zweite Abschnitt federvorgespannt zueinander hingezogen werden, wobei der erste Abschnitt und der zweite Abschnitt entgegen der Federkraft voneinander wegbewegt werden, wenn der Bedienadapter an einem Endgerät angebracht wird.

Der Bedienadapter kann beispielsweise auch mehrere Verbindungsabschnitte unterschiedlicher Dimensionen aufweisen, so dass je nach Typ des Endgeräts ein passender Verbindungsabschnitt auszuwählen ist, an dem der erste und der zweite Abschnitt (lösbar) befestigt werden, um den Bedienadapter klemmend an dem betreffenden Endgerätetyp befestigen zu können. Bei Verwendung eines anderen Endgerätetyps kann in einfacher Weise der Verbindungsabschnitt gewechselt werden.

Weiterhin ist es auch denkbar, dass der erste Abschnitt und der zweite Abschnitt mittels zweier Verbindungsabschnitte miteinander verbunden sind, derart, dass der Bedienadapter mit dem ersten Abschnitt, dem zweiten Abschnitt und den Verbindungsabschnitten das mobile Endgerät auf vier Seiten einfasst.

Ferner wird ein Fernbedienungssystem für eine Baumaschine, insbesondere ein Bodenverdichtungsgerät wie eine Grabenwalze oder eine Rüttelplatte, vorgeschlagen mit einem mobilen Endgerät, insbesondere Smartphone oder Tabletcomputer, das einen berührungsempfindlichen Bildschirm aufweist, und mit einem an dem Endgerät angebrachten, oben beschriebenen Bedienadapter, wobei das Endgerät dazu eingerichtet ist, die Lage des Bedienadapters relativ zu dem Bildschirm zu bestimmen und die Baumaschine basierend auf Eingaben einer Bedienperson zu steuern, und wobei die Eingaben der Bedienperson zumindest teilweise unter Nutzung des Bedienadapters erfolgen.

Ein derartiges Fernbedienungssystem ermöglicht durch das einfache Anbringen des Bedienadapters an einem mobilen Endgerät, beispielsweise einem Smartphone, die Nutzung des Smartphones als Fernbedienung für die Baumaschine, wobei mittels des Bedienadapters eine haptisch wahrnehmbare Bedienung ermöglicht ist.

Bei dem Fernbedienungssystem kann auf dem Endgerät wenigstens ein Softwareprogramm installiert sein, das dazu eingerichtet ist, die Baumaschine unter Verwendung des Bedienadapters zu steuern.

In diesem Zusammenhang kann das Softwareprogramm und somit das Endgerät dazu eingerichtet sein, eine Kalibrierung durchzuführen, so dass basierend auf der relativen Positionierung des Bedienadapters an dem Endgerät die Steuerung der Baumaschine festgelegt werden kann.

Der Bedienadapter kann beispielweise an oder in dem ersten Abschnitt Positionierungselemente aufweisen, die an dem Touchscreen ein von dem Softwareprogramm erkennbares und für die Kalibrierung auswertbares Signalmuster erzeugen. Zum Beispiel können an dem ersten Abschnitt drei oder mehr punktuelle Signale an dem Touchscreen hervorgerufen werden, so dass dessen zweidimensionale Lage entlang bzw. auf der Bildschirmoberfläche bestimmbar ist.

Ferner wird ein Verfahren zur Fernbedienung einer Baumaschine, insbesondere eines Bodenverdichtungsgeräts, wie einer Grabenwalze oder einer Rüttelplatte, vorgeschlagen, wobei das Verfahren folgende Schritte umfasst:
- Bereitstellen eines mobilen Endgeräts, insbesondere Smartphone oder Tabletcomputer, auf dem wenigstens ein Softwareprogramm installiert ist, das dazu eingerichtet ist, die Baumaschine zu steuern;
- Bereitstellen eines oben beschriebenen Bedienadapters;
- Anbringen des Bedienadapters an dem Endgerät;
- Starten von dem wenigstens einen Softwareprogramm;
- Bestimmen der Lage des Bedienadapters relativ zu dem Bildschirm;
- Steuern der Baumaschine unter Verwendung des Bedienadapters.

Dabei kann das Anbringen des Bedienadapters vor oder nach dem Starten des betreffenden Softwareprogramms durchgeführt werden. Wird das Softwareprogramm beispielswese zuerst gestartet, ist es denkbar, dass auf dem Bildschirm zunächst eine Aufforderung erscheint, die zur Anbringung des Bedienadapters auffordert. Sobald der Bedienadapter angebracht ist, führt das Softwareprogramm eine entsprechende Kalibrierung durch, um die relative Positionierung des Bedienadapters zum Touchscreen zu bestimmen.

Weitere Vorteile und Einzelheiten der Erfindung ergeben sich aus der nachfolgenden Beschreibung von Ausführungsformen unter Bezugnahme auf die Figuren. Dabei zeigen:
- **Fig. 1**: eine vereinfachte und schematische Seitenansicht eines Bedienadapters;
- **Fig. 2**: eine vereinfachte und schematische, perspektivische Draufsicht auf den Bedienadapter der Fig. 1;
- **Fig. 3**: eine vereinfachte und schematische, perspektivische Draufsicht auf den Bedienadapter der Fig. 1 und 2;
- **Fig. 4**: eine vereinfachte und schematische, perspektivische Darstellung des Bedienadapters der Fig. 1 bis 3, angebracht an einem mobilen Endgerät;
- **Fig. 5**: eine vereinfachte und schematische, perspektivische Darstellung des Bedienadapters der Fig. 1 bis 3 mit Halteelement, angebracht an dem mobilen Endgerät;
- **Fig. 6**: eine vereinfachte und schematische Seitenansicht eines Bedienadapters mit Joystick;
- **Fig. 7**: eine vereinfachte und schematische, perspektivische Draufsicht auf den Bedienadapter der Fig. 6;
- **Fig. 8**: eine vereinfachte und schematische, perspektivische Darstellung des Bedienadapters der Fig. 6 bis 7, angebracht an einem mobilen Endgerät;
- **Fig. 9**: eine vereinfachte und schematische Ansicht eines Fernbedienungssystems für beispielhaft dargestellte Baumaschinen; und
- **Fig. 10**: ein vereinfachtes und schematisches Ablaufdiagramm eines Verfahrens zur Fernbedienung einer Baumaschine.

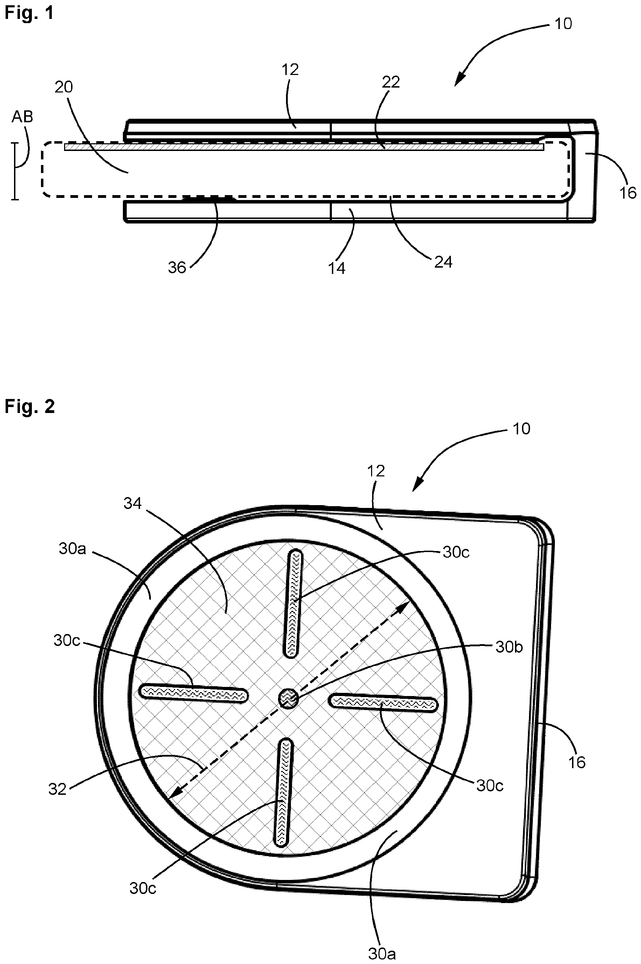

Fig. 1 zeigt eine vereinfachte und schematische Seitendarstellung eines Bedienadapters 10. Der Bedienadapter 10 weist einen ersten, insbesondere oberen Abschnitt 12 auf. In einem Abstand AB zu dem ersten Abschnitt 12 weist der Bedienadapter 10 einen zweiten, insbesondere unteren Abschnitt 14 auf. Der erste Abschnitt 12 und der zweite Abschnitt 14 sind durch wenigstens einen Verbindungsabschnitt 16 miteinander verbunden. In dem gezeigten Beispiel weist der Bedienadapter 10 den seitlichen Verbindungsabschnitt 16 auf, der in der Fig. 1 auf der rechten Seite dargestellt ist. Es ist aber auch denkbar, dass der erste Abschnitt 12 und der zweite Abschnitt 14 so ausgestaltet sind, dass sie auch auf der anderen (linken) Seite mittels eines weiteren, hier nicht dargestellten Verbindungsabschnitts miteinander verbunden sein können.

Der erste Abschnitt 12, der zweite Abschnitt 14 und der Verbindungsabschnitt 16 können einstückig ausgebildet sein, insbesondere können sie aus einem Kunststoff hergestellt sein. Alternativ ist es auch denkbar, dass der erste Abschnitt 12 oder/und der zweite Abschnitt 14 relativ zu dem Verbindungsabschnitt 16 verstellbar sind, derart, dass der Abstand AB zwischen dem ersten Abschnitt 12 und dem zweiten Abschnitt 14 anpassbar bzw. einstellbar ist.

Zwischen dem ersten Abschnitt 12 und dem zweiten Abschnitt 14 des Bedienadapters 10 kann ein mobiles Endgerät 20, insbesondere ein Smartphone oder ein Tabletcomputer, aufgenommen werden. Das mobile Endgerät 20 ist in Fig. 1 lediglich als gestricheltes Rechteck illustriert.

Mit anderen Worten ist der erste Abschnitt 12 an einem berührungsempfindlichen Bildschirm 22 des Endgeräts 20 anordenbar oder angeordnet, so dass der erste Abschnitt 12 zumindest einen Teil des Bildschirms 22 überlappt. In der Fig. 1 ist der Bildschirm 22, der auch als Touchscreen bezeichnet werden kann, vereinfacht als schraffiertes Rechteck dargestellt.

Der zweiten Abschnitt 14 ist an einer Rückseite 24 des Endgeräts 20 anordenbar oder angeordnet, so dass der zweite Abschnitt 14 zumindest einen Teil der Rückseite 24 überlappt.

Der erste Abschnitt 12 und der zweite Abschnitt 14 sind, wie bereits oben erwähnt, zumindest einseitig mittels des Verbindungsabschnitts 16 miteinander verbunden, so dass der Bedienadapter 10 an dem Endgerät 20 klemmend befestigbar oder befestigt ist.

Fig. 2 zeigt eine vereinfachte und schematische, perspektivische Draufsicht auf den Bedienadapter 10 der Fig. 1, mit dem ersten Abschnitt 12 und dem seitlichen Verbindungsabschnitt 16.

Aus der Darstellung der Fig. 2 ist ersichtlich, dass der erste Abschnitt 12 wenigstens ein von einer Bedienperson haptisch wahrnehmbares Führungselement 30a, 30b, 30c aufweist, das dazu eingerichtet ist, innerhalb des Überlappungsbereichs von dem erstem Abschnitt 12 und dem Bildschirm 22 (Fig. 1) eine von der Bedienperson durchgeführte Bewegung, die von dem Bildschirm 22 erfassbar ist, haptisch zu begrenzen oder/und haptisch relativ zu dem Bildschirm 22 zu orientieren. Das bedeutet, dass die Bedienperson mit einem oder mehreren Finger die jeweiligen Führungselemente 30a, 30b, 30c erfühlen kann und somit eine Orientierung auf der Oberfläche des Bildschirms 22 erfährt, ohne den Blick auf den Bildschirm 22 werfen zu müssen.

Der Bedienadapter 10 weist als erstes Führungselement 30a einen vorstehenden Begrenzungsrand auf, der einen im Überlappungsbereich befindlichen Bedienbereich 32 festlegt. Im gezeigten Beispiel ist der Bedienbereich 32 kreisförmig ausgebildet.

Innerhalb des Bedienbereichs 32 ist in diesem Beispiel an dem ersten Abschnitt 12 eine Folie 34 anbringbar oder angebracht, wobei die Folie 34, die üblicherweise transparent ist, in Fig. 2 durch eine gekreuzte Schraffur besser erkennbar illustriert ist. An der Folie 34 sind weitere Führungselemente 30b, 30c angeordnet sind, die eine Orientierung für die Bedienperson bzw. deren Finger innerhalb des Bedienbereichs 32 ermöglichen. Die Folie 34 kann beispielsweise mit dem ersten Abschnitt 12 fest verbunden sein. Alternativ ist es auch denkbar, den ersten Abschnitt 12 und die Folie 34 so auszugestalten, dass die Folie 34 auswechselbar ist, so dass sie bei Abnutzung oder dergleichen ausgewechselt werden kann.

Beispielhaft weist die Folie 34 bei dem Bedienadapter 10 der Fig. 2 einen zentral angeordneten, erhabenen Punkt 30b als Führungselement auf. Ferner sind mehrere erhabene Linien bzw. Geraden 30c als haptisch wahrnehmbare Führungselemente angeordnet. Die Führungselemente 30b, 30c bilden auf der Folie 34 eine Art Koordinatenkreuz, das von einer Bedienperson mittels eines Fingers, insbesondere des Daumens oder Zeigefingers, wahrnehmbar ist.

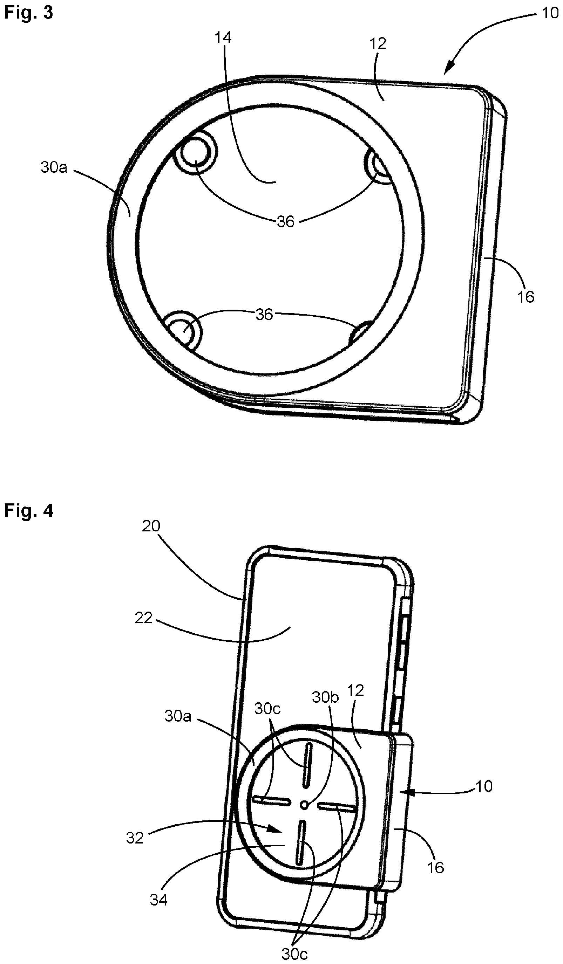

Fig. 3 zeigt eine vereinfachte und schematische, perspektivische Draufsicht auf den Bedienadapter 10 der Fig. 1. mit dem ersten Abschnitt 12 und dem seitlichen Verbindungsabschnitt 16. Anders als in Fig. 2 ist die Darstellung der Folie 34 weggelassen, so dass man durch eine im ersten Abschnitt 12 von dem Begrenzungsrand 30a gebildete Öffnung auf den zweiten Abschnitt 14 blicken kann. Aus dieser Darstellung sind beispielhaft an dem zweiten Abschnitt 14 angeordnete rutschhemmende Elemente 36 ersichtlich. Ein solches rutschhemmendes Element 36 ist auch in der Fig. 1 angedeutet. Durch das Vorsehen bzw. Anordnen von solchen rutschhemmenden Elementen 36 oder einer rutschhemmenden Beschichtung wird die klemmende Befestigung und das reibschlüssige Fixieren des Bedienadapters 10 an dem Endgerät 20 verbessert.

Fig. 4 zeigt den Bedienadapter der Fig. 1 bis 3 in einem an dem Endgerät 20 angebrachten Zustand. Es wird darauf hingewiesen, dass die hier dargestellte Positionierung des Bedienadapters 10 an dem Endgerät 20 rein beispielhaft ist. Der Bedienadapter 10 kann auch weiter oben oder weiter unten an dem Endgerät 20 angeordnet werden oder er kann von der anderen Seite auf das Endgerät 20 aufgesteckt sein, so dass der Verbindungsabschnitt 16 auf der in der Fig. 4 linken Seite des Endgeräts 20 liegen würde.

Aus der Fig. 4 ist insbesondere ersichtlich, dass der erste Abschnitt 12 an dem Bildschirm 22 des Endgeräts 20 angeordnet ist, so dass der erste Abschnitt 12 einen Teil des Bildschirms 22 überlappt. Der zweite Abschnitt 14, der in dieser Darstellung nicht sichtbar ist, ist an der ebenfalls nicht sichtbaren Rückseite des Endgeräts 20 angeordnet ist, so dass der zweite Abschnitt 14 zumindest einen Teil der Rückseite überlappt.

Der erste Abschnitt 12 weist die oben bereits beschriebenen, von einer Bedienperson haptisch wahrnehmbaren Führungselemente 30a, 30b, 30c auf. Der als erstes Führungselement 30a an dem ersten Abschnitt 12 ausgebildete Begrenzungsrand 30a ist dazu eingerichtet, innerhalb des Überlappungsbereichs von dem ersten Abschnitt 12 und dem Bildschirm 22 eine von der Bedienperson durchgeführte Bewegung, die von dem Bildschirm 22 erfassbar ist, haptisch zu begrenzen.

Die weiteren Führungselemente 30b, 30c, die an der Folie 34 ausgebildet sind, sind dazu eingerichtet, innerhalb des Überlappungsbereichs von dem erstem Abschnitt 12 und dem Bildschirm 22 eine von der Bedienperson durchgeführte Bewegung, die von dem Bildschirm 22 erfassbar ist, haptisch relativ zu dem Bildschirm 22 zu orientieren bzw. zu führen.

Durch den an dem Endgerät 22 befestigten Bedienadapter 10 ist es also möglich, haptisch wahrnehmbar einen Bedienbereich 32 festzulegen, innerhalb dessen die Fernbedienung für eine Baumaschine erfolgen kann bzw. soll, wobei aufgrund der haptisch wahrnehmbaren Führungselemente 30a, 30b, 30c auch eine Fernbedienung auf dem Touchscreen 22 möglich ist, ohne dass die Bedienperson ihren Blick auf den Touchscreen 22 richten muss.

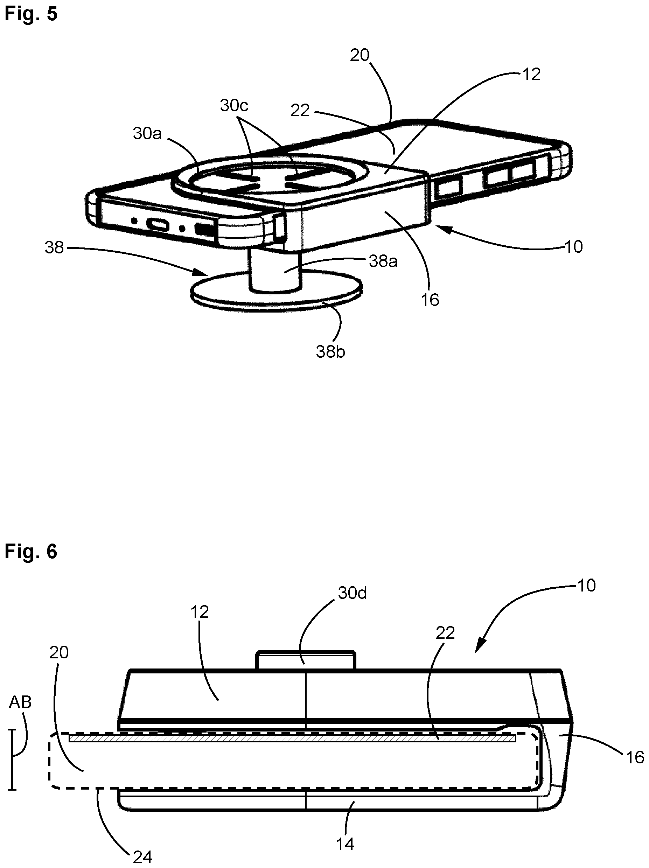

Fig. 5 zeigt den Bedienadapter 10 der Fig. 1 bis 4 mit einem optionalen Halteelement 38. Das Halteelement 38 ist mit dem zweiten Abschnitt 14 verbunden oder einstückig mit diesen ausgebildet. Im gezeigten Beispiel ist das Halteelement 38 von einem zylindrischen Distanzstück 38a und einer kreisförmigen Haltescheibe 38b gebildet. Dies ermöglicht eine sichere einhändige Handhabung und Fernbedienung, wobei beispielweise der Daumen der rechten Hand auf dem Touchscreen 22 innerhalb des Bedienbereichs 32 der Bedienadapters 10 angeordnet wird und wobei das zylindrische Distanzstück 38a zwischen zwei Fingern der gleichen Hand, etwa Zeige- und Mittelfinger oder Mittel- und Ringfinger aufgenommen ist.

Das hier gezeigte Halteelement 38 ist nur ein Beispiel. Das Halteelement 38 kann auch anders ausgebildet sein, etwa eine zumindest teilweise konische Form aufweisen oder in sonstiger Weise ergonomisch ausgebildet sein, um eine sichere und angenehme einhändige Bedienung zu ermöglichen.

Nachfolgend wird unter Bezugnahme auf die Fig. 6 bis 8 ein anderes Beispiel eines Bedienadapters 10 beschrieben.

Fig. 6 zeigt eine vereinfachte und schematische Seitendarstellung das andere Beispiel eines Bedienadapters 10. Auch dieser Bedienadapter 10 weist einen ersten, insbesondere oberen Abschnitt 12 auf. In einem Abstand AB zu dem ersten Abschnitt 12 weist der Bedienadapter 10 einen zweiten, insbesondere unteren Abschnitt 14 auf. Der erste Abschnitt 12 und der zweite Abschnitt 14 sind durch wenigstens einen Verbindungsabschnitt 16 miteinander verbunden. Auch in diesem Beispiel weist der Bedienadapter 10 den seitlichen Verbindungsabschnitt 16, der in der Fig. 6 auf der rechten Seite dargestellt ist. Es ist aber auch denkbar, dass der erste Abschnitt 12 und der zweite Abschnitt 14 so ausgestaltet sind, dass sie auch auf der anderen (linken) Seite mittels eines weiteren, hier nicht dargestellten Verbindungsabschnitts miteinander verbunden sein können.

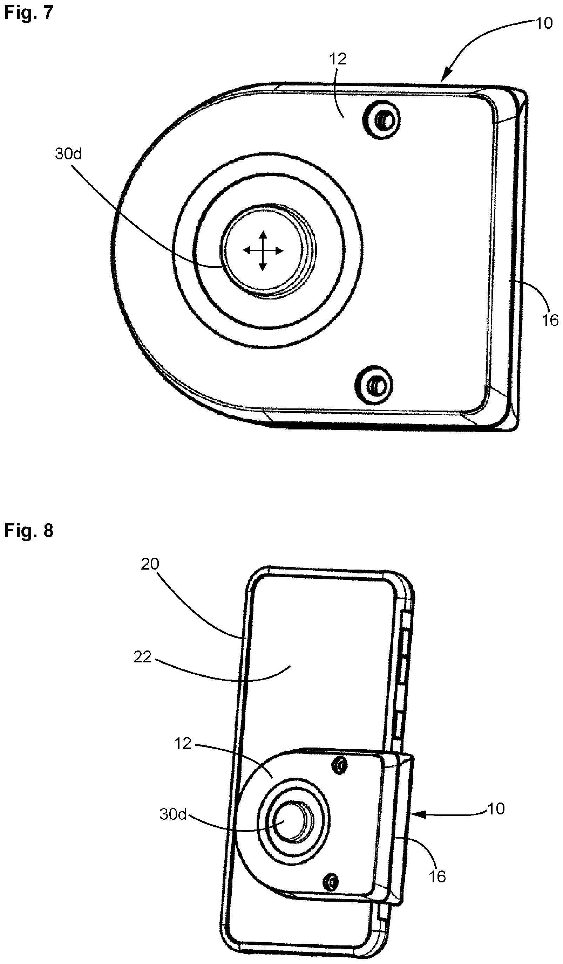

In diesem Beispiel weist der erste Abschnitt 12 als Führungselement einen Joystick 30d auf, der relativ zu dem ersten Abschnitt 12 beweglich gelagert ist und der dazu eingerichtet ist, Bewegungen des Joysticks 30d auf den Bildschirm 22 zu übertragen. Dabei kann der Joystick 30d relativ zu dem ersten Abschnitt 12 federnd gelagert sein, derart, dass er aufgrund der wirkenden Federkräfte in einem unbetätigten Zustand in einer zentralen Ruhestellung angeordnet bzw. gehalten ist, was insbesondere aus den Fig. 7 und 8 ersichtlich ist.

Der Joystick 30d steht etwas über den ersten Abschnitt 12 vor, so dass er von einer Bedienperson haptisch wahrnehmbar und betätigbar ist. Insbesondere kann der Joystick 30d durch den Daumen einer Bedienperson in verschiedene Richtungen bewegt werden, was in Fig. 7 durch die kleinen Doppelpfeile illustriert ist. Die Joystickbewegung wird auf den Touchscreen 22 des Endgeräts 20 übertragen, um auf diese Weise die Fernbedienung einer Baumaschine zu ermöglichen.

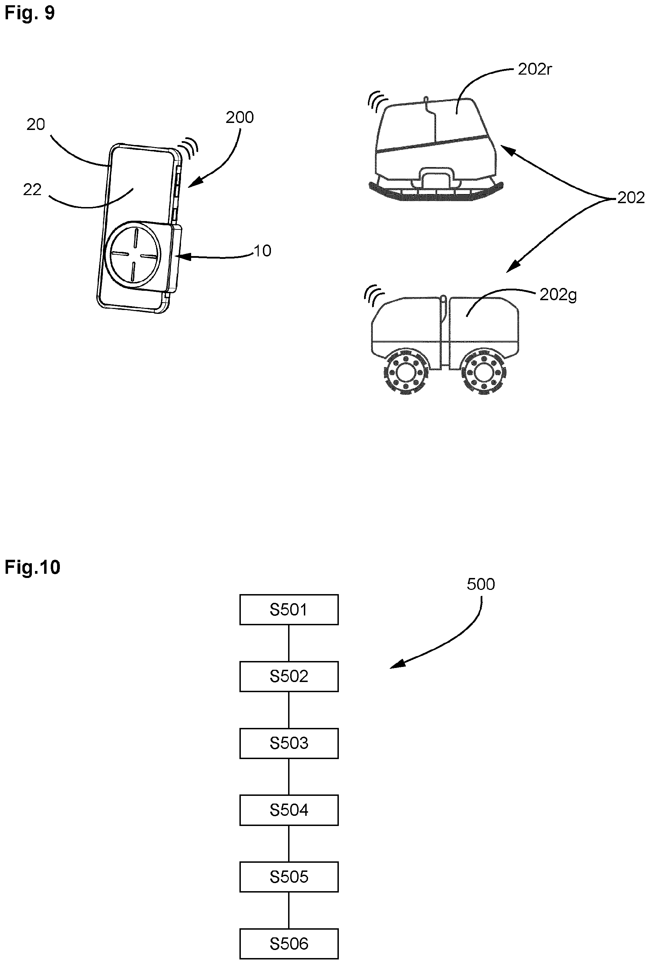

In der Fig. 9 ist Fernbedienungssystem 200 für eine Baumaschine 202, insbesondere eine Rüttelplatte 202r oder eine Grabenwalze 202g dargestellt. Das Fernbedienungssystem 200 umfasst das mobile Endgerät 20, insbesondere Smartphone oder Tabletcomputer, das den berührungsempfindlichen Bildschirm 22 aufweist, sowie den an dem Endgerät 20 angebrachten Bedienadapter 10.

In der Fig. 9 ist der Bedienadapter 10 gemäß den Fig. 1 bis 5 beispielhaft gezeigt. Es kann aber auch der Bedienadapter 10 gemäß dem Beispiel der Fig. 6 bis 8 eingesetzt werden.

Unabhängig davon, welche Ausgestaltung der Bedienadapter 10 aufweist, ist das Endgerät 20 dazu eingerichtet ist, die Lage des Bedienadapters 10 relativ zu dem Bildschirm 22 zu bestimmen und die Baumaschine 202 basierend auf Eingaben einer Bedienperson zu steuern, wobei die Eingaben der Bedienperson zumindest teilweise unter Nutzung des Bedienadapters 10 erfolgen. Hierzu ist auf dem Endgerät 20 wenigstens ein Softwareprogramm installiert, das dazu eingerichtet ist, die Baumaschine 202 unter Verwendung des Bedienadapters 10 zu steuern.

Fig. 10 zeigt ein vereinfachtes Ablaufdiagramm eines Verfahrens 500 zur Fernbedienung einer Baumaschine 202, insbesondere einer Rüttelplatte 202r oder einer Grabenwalze 202g.

Gemäß einem Schritt S501 erfolgt das Bereitstellen eines mobilen Endgeräts 20, insbesondere Smartphones oder Tabletcomputers, auf dem wenigstens ein Softwareprogramm installiert ist, das dazu eingerichtet ist, die Baumaschine 202 zu steuern.

Gemäß einem Schritt S502 wird ein oben unter Bezugnahme auf die Fig. 1 bis 5 oder 6 bis 8 beschriebener Bedienadapter 10 bereitgestellt.

In Schritt S503 erfolgt das Anbringen des Bedienadapters 10 an dem Endgerät 20.

Gemäß einem Schritt S504 wird auf dem Endgerät 20 das wenigstens eine Softwareprogramm gestartet.

Die Reihenfolge der Schritte S503 und S504 ist nicht entsprechend der Nummerierung zwingend vorgeschrieben. Insbesondere kann das Starten des Softwareprogramms auf dem Endgerät 20 auch vor dem Anbringen (S502) des Bedienadapters 10 durchgeführt werden.

Gemäß einem weiteren Schritt S505 erfolgt mittels des Softwareprogramms das Bestimmen der Lage des Bedienadapters 10 relativ zu dem Bildschirm 20. Es wird dabei in anderen Worten festgestellt, wo sich der Bedienbereich 32 bzw. der Joystick 30d in Relation zu dem Bildschirm 22 befindet.

Schließlich wird gemäß Schritt S506 die betreffende Baumaschine 202 unter Verwendung des Bedienadapters 10 ferngesteuert.

Mit anderen Worten ist in dem Softwareprogramm ein Kalibrationsmodus integriert, um den Bedienadapter 10 frei auf das mobile Endgerät 20 aufsetzen zu können. In einem Startprozess des Softwareprogramms wird die Auswahl des Bedienbereichs 32 abgefragt. Zu diesem Zeitpunkt kann beispielsweise der Bedienadapter 10 zur Bedienhilfe aufgesetzt werden (S503). Der Bedienbereich 32 kann beispielsweise durch Abfahren von Extrempositionen erfasst werden. In dem so erfassten Bedienbereich 32 wird der digitale Joystick aufgespannt. Ein Mittelpunkt kann von dem Softwareprogramm berechnet werden. Gleiches kann für die Skalierung der Auslenkung des virtuellen Joysticks erfolgen. Hierzu kann beispielsweise eine programmierbare Kennlinie hinterlegt sein.

Der Bedienadapter 10 kann mit Markern an dem ersten Abschnitt 12 auf der Berührfläche zum Touchscreen 22 versehen werden, was eine Autokalibration durch Erfassen der Marker ermöglicht. Hierdurch kann die Benutzung des Bedienadapters 10 weiter vereinfacht werden, weil der der Kalibrationsprozess nicht manuell ausgeführt werden muss. Zusätzlich wandert durch ständiges Abfragen der Marker der digitale Joystick bei Verschieben des Bedienadapters 10 mit.

Der hier vorgestellte Bedienadapter 10 bietet somit einer Bedienperson einen sicheren und haptisch klar abgegrenzten Bedienbereich 32 für einen auf dem Touchscreen 22 dargestellten digitalen Joystick. Die Bedienperson bekommt aufgrund der Führungselemente 30a, 30b, 30c bzw. des Joysticks 30d ohne visuelle Wahrnehmung einen klaren Eindruck des Bedienbereiches 32 sowie der Ausrichtung des Endgeräts 20 im Raum, so dass eine Fernbedienung einer Baumaschine ermöglicht ist, ohne regelmäßig auf den Bildschirm 22 des Endgeräts 20 blicken zu müssen.

## Patentansprüche

1. Bedienadapter (10) für ein mobiles Endgerät (20) mit einem berührungsempfindlichen Bildschirm (22), zur Fernsteuerung von Baumaschinen (202), mit
- einem ersten Abschnitt (12), der an dem Bildschirm (22) des Endgeräts (20) anordenbar ist, so dass der erste Abschnitt (12) zumindest einen Teil des Bildschirms (22) überlappt; und mit
- einem zweiten Abschnitt (14), der an einer Rückseite (24) des Endgeräts (20) anordenbar ist, so dass der zweite Abschnitt (14) zumindest einen Teil der Rückseite (24) überlappt; wobei
- der erste Abschnitt (12) und der zweite Abschnitt (14) zumindest einseitig mittels eines Verbindungsabschnitts (16) miteinander verbunden sind, so dass der Bedienadapter (10) an dem Endgerät (20) klemmend befestigbar ist; und wobei
- der erste Abschnitt (12) wenigstens ein von einer Bedienperson haptisch wahrnehmbares Führungselement (30a-d) aufweist, das dazu eingerichtet ist, innerhalb des Überlappungsbereichs von dem ersten Abschnitt (12) und dem Bildschirm (22) eine von der Bedienperson durchgeführte Bewegung, die von dem Bildschirm (22) erfassbar ist, haptisch zu begrenzen oder/und haptisch relativ zu dem Bildschirm (22) zu orientieren.

2. Bedienadapter (10) nach Anspruch 1, wobei an dem zweiten Abschnitt (14) wenigstens ein von der Bedienperson zu ergreifendes Halteelement (38) angeordnet ist.

3. Bedienadapter (10) nach Anspruch 1 oder 2, wobei der erste Abschnitt (12) als erstes Führungselement einen von dem Bildschirm (22) vorstehenden Begrenzungsrand (30a) aufweist, der einen im Überlappungsbereich befindlichen Bedienbereich (32) festlegt.

4. Bedienadapter (10) nach Anspruch 3, wobei innerhalb des Bedienbereichs (32) an dem ersten Abschnitt (12) eine Folie (34) angebracht ist, wobei an der Folie (34) weitere Führungselemente (30b, 30c) angeordnet sind, die eine Orientierung innerhalb des Bedienbereichs (32) ermöglichen.

5. Bedienadapter (10) nach Anspruch 4, wobei die Führungselemente (30b, 30c) als erhabene Linien (30c) oder Punkte (30b) oder als Durchbrüche in der Folie (34) ausgeführt sind.

6. Bedienadapter (10) nach Anspruch 1 oder 2, wobei der erste Abschnitt (12) als Führungselement einen Joystick (30d) aufweist, der relativ zu dem ersten Abschnitt (12) beweglich gelagert ist und der dazu eingerichtet ist, Bewegungen des Joysticks (30d) auf den Bildschirm (22) zu übertragen.

7. Bedienadapter (10) nach Anspruch 6, wobei der Joystick (30d) relativ zu dem ersten Abschnitt (12) federnd gelagert ist, derart, dass er aufgrund der wirkenden Federkräfte in einem unbetätigten Zustand in einer zentralen Ruhestellung angeordnet ist.

8. Fernbedienungssystem (200) für eine Baumaschine (202), mit
- einem mobilen Endgerät (20), das einen berührungsempfindlichen Bildschirm (22) aufweist; und mit
- einem an dem Endgerät (20) angebrachten Bedienadapter (10) gemäß einem der vorhergehenden Ansprüche; wobei
- das Endgerät (20) dazu eingerichtet ist, die Lage des Bedienadapters (10) relativ zu dem Bildschirm (22) zu bestimmen und die Baumaschine (202) basierend auf Eingaben einer Bedienperson zu steuern, wobei die Eingaben der Bedienperson zumindest teilweise unter Nutzung des Bedienadapters (10) erfolgen.

9. Fernbedienungssystem (200) gemäß Anspruch 8, wobei auf dem Endgerät (20) wenigstens ein Softwareprogramm installiert ist, das dazu eingerichtet ist, die Baumaschine (202) unter Verwendung des Bedienadapters (10) zu steuern.

10. Verfahren (500) zur Fernbedienung einer Baumaschine (202), wobei das Verfahren (500) folgende Schritte umfasst:
- Bereitstellen (S501) eines mobilen Endgeräts (20), insbesondere Smartphone oder Tabletcomputer, auf dem wenigstens ein Softwareprogramm installiert ist, das dazu eingerichtet ist, die Baumaschine (202) zu steuern;
- Bereitstellen (S502) eines Bedienadapters (10) gemäß einem der Ansprüche 1 bis 7;
- Anbringen (S503) des Bedienadapters (10) an dem Endgerät (20);
- Starten (S504) von dem wenigstens einen Softwareprogramm;
- Bestimmen (S505) der Lage des Bedienadapters (10) relativ zu dem Bildschirm (22);
- Steuern (S506) der Baumaschine (202) unter Verwendung des Bedienadapters (10).
